Europäisches Patentamt

(19) European Patent Office

Office européen des brevets

(11) Numéro de publication: **0 043 298**
**B1**

(12) **FASCICULE DE BREVET EUROPEEN**

(51) Int. Cl.³: **H 04 N 3/34**

(45) Date de publication du fascicule du brevet:
**18.04.84**

(21) Numéro de dépôt: **81400907.2**

(22) Date de dépôt: **05.06.81**

(54) **Système de télévision à haute définition.**

(30) Priorité: **27.06.80 FR 8014352**

(43) Date de publication de la demande:
**06.01.82 Bulletin 82/1**

(45) Mention de la délivrance du brevet:
**18.04.84 Bulletin 84/16**

(84) Etats contractants désignés:
**AT BE CH DE FR GB IT LI LU NL SE**

(56) Documents cités:
**DE - A - 2 402 102**
**FR - A - 1 137 684**
**FR - A - 2 142 975**
**GB - A - 758 085**
**GB - A - 2 003 698**
**US - A - 2 922 965**
**US - A - 3 743 766**

**Compte-Rendu FKTG 1979 pages 562 à 583**

(73) Titulaire: **THOMSON-CSF, 173, Boulevard Haussmann,**
**F-75379 Paris Cedex 08 (FR)**

(72) Inventeur: **Favreau, Michel, THOMSON-CSF**
**SCPI 173, bld Haussmann, F-75360 Paris Cedex 08 (FR)**

(74) Mandataire: **Turlèque, Clotilde et al, THOMSON-CSF**
**SCPI 173, Bld Haussmann, F-75379 Paris Cedex 08 (FR)**

# Système de télévision à haute définition

La présente invention concerne les systèmes de télévision en général, comportant à l'émission un dispositif de prise de vues et, à la réception, un dispositif de restitution de vues.

Les systèmes de télévision classiques actuellement connus sont basés sur une analyse des images par lignes successives balayées de haut en bas à une cadence de 50 trames/s en Europe et de 60 trames/s aux USA et au Japon. En Europe, le nombre de lignes par trame est de 312,5, soit 625 lignes pour deux trames successives grâce à un décalage imposé au balayage vertical d'une trame à la suivante. Le même artifice est utilisé aux USA avec 262,5 lignes par trame, soit 525 lignes pour deux trames entrelacées.

Ces systèmes, bien que parfaitement au point et exploités au maximum de leurs possibilités, restent limités en performances, principalement en ce qui concerne la définition lorsqu'ils sont comparés à la projection cinématographique (pour des films en 16 mm et surtout en 35 mm de largeur).

De plus, un besoin d'observation en groupes des images de télévision, c'est-à-dire sur grand écran, fait apparaître de nouvelles conditions d'observation (angle d'observation plus ouvert, distance moyenne d'observation de l'ordre de trois fois la diagonale de l'écran au lieu de cinq), ce qui implique la nécessité d'accroître la définition des images projetées.

Des tubes cathodiques de grand diamètre et des projecteurs capables de donner la définition nécessaire ont été réalisés (l'Eidophore par exemple), mais ces dispositifs ont l'inconvénient d'être chers et encombrants.

Un système de télévision haute définition apparaît également nécessaire pour l'introduction de la technique télévision dans la prise de vues destinée au cinéma. En effet, les moyens techniques développés pour la télévision permettent actuellement une réalisation de programmes nettement plus économiques (visualisation immédiate pendant le tournage) et des possibilités de truquage beaucoup plus sophistiquées.

Il est connu, pour les systèmes classiques, d'améliorer la qualité subjective des images en vision rapprochée en effectuant une modulation de faible amplitude et à très haute fréquence (nettement plus élevée que le double de la plus haute fréquence transmise) du signal de balayage vertical classique du tube récepteur, cela dans le but de combler l'intervalle entre les lignes, devenu gênant à courte distance. Cet artifice est efficace, mais ne restitue pas la définition manquante à la prise de vues.

Une autre méthode connue consiste à réaliser des systèmes de télévision haute définition à partir d'une simple extrapolation des systèmes classiques par augmentation du nombre de lignes à l'analyse et à la réception (par exemple: système de télévision 1250 lignes). Mais ces systèmes extrapolés mettent en jeu une bande passante analogique ou un débit numérique trop importants pour pouvoir bénéficier des avantages de cette méthode.

Il est connu (demande de brevet français FR-A No 2142975) des systèmes de télévision dont le principe consiste à effectuer une analyse horizontale de l'image non pas linéaire, mais ondulatoire. Pour cela, le balayage est effectué par un spot soumis non seulement aux déviations habituelles, mais aussi à une déviation supplémentaire dont la fréquence est grande par rapport à la fréquence des lignes de balayage. Cette déviation supplémentaire est appelée «wobbling du spot», et peut être réalisée avec différentes formes d'ondes données à l'avance, à savoir des ondes sinusoïdales ou rectangulaires. A la réception, de tels systèmes de télévision utilisent des signaux de balayage identiques à ceux de l'analyse afin que la disposition des points visualisés soit la même que celle des points analysés à l'émission. Ainsi, la définition des images dans le sens vertical est subjectivement améliorée par un effet d'engagement en quinconce des points visualisés (par suite de la tendance naturelle de l'œil à rechercher des alignements de points dans les images).

D'autre part, le compte rendu du Congrès FKTG 1979, pages 562 à 583, suggère un dispositif de réception comportant une mémoire numérique pour stocker deux trames d'image, des moyens pour lire dans cette mémoire alternativement une ligne de la première trame puis une ligne de la deuxième, et des moyens pour balayer un écran à une fréquence double de la fréquence d'analyse des lignes.

La présente invention a pour objet un système de télévision engendrant une définition bien meilleure que celle obtenue avec les systèmes actuels et mettant en jeu un débit numérique environ deux fois moins élevé que dans les systèmes directement extrapolés déjà cités. Le système de télévision à haute définition selon l'invention présente en outre, par rapport aux systèmes classiques actuellement en cours d'exploitation, un caractère de compatibilité intéressant.

Selon l'invention, un système de télévision à haute définition, comportant, à l'émission, un dispositif de prise de vues comportant: un tube analyseur fournissant un signal vidéofréquence, et un premier générateur de signaux générant les signaux de balayage 1H et 1V nécessaires au fonctionnement du tube analyseur, ces signaux 1H et 1V engendrant une analyse ondulatoire ayant pour fréquence ligne $F_L$ et pour fréquence d'ondulation F, et, à la réception, un dispositif de restitution de vues comportant: un tube récepteur, un deuxième générateur de signaux générant des signaux de balayage 2H et 2V nécessaires au fonctionnement du tube récepteur, ces signaux 2H et 2V engendrant une restitution linéaire ayant pour fréquence ligne $2F_L$, est caractérisé en ce que le dispositif de restitution de vues comporte en outre: une première voie de traitement ayant une entrée couplée à l'entrée du dispositif de restitution de vues et une sortie fournissant un premier signal correspondant à la partie basse du spectre du signal d'entrée du tube récepteur, une deuxième voie de traitement ayant une entrée couplée à l'entrée du dispositif de restitution de vues et une sortie fournissant un deuxième signal correspondant à la partie haute du spectre du signal d'entrée du tube récepteur, et un mélangeur analogique ayant des première et deuxième entrées respectivement couplées à la sortie de la première voie de traitement et à la sortie de la deuxième voie de traitement, et une sortie fournissant le signal d'entrée du tube récepteur.

L'invention sera mieux comprise et d'autres caractéristiques apparaîtront à l'aide de la description ci-après et des dessins s'y rapportant sur lesquels:

la fig. 1 est un schéma d'un exemple de réalisation du dispositif de prise de vues du système de télévision selon l'invention;

la fig. 2 est un schéma du dispositif de restitution de vues du système de télévision selon l'invention;

la fig. 3 permet de mieux comprendre les dispositifs décrits sur les fig. 1 et 2.

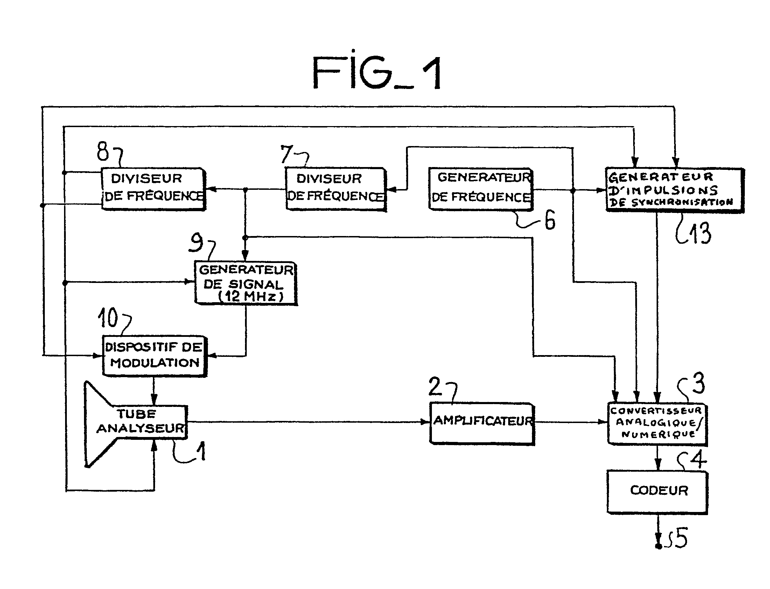

Sur la fig. 1, un tube analyseur 1 destiné à prendre des vues comporte une sortie reliée à une première entrée d'un convertisseur analogique-numérique 3 à travers un amplificateur 2. Les deuxième et troisième entrées de ce convertisseur analogique-numérique 3 sont respectivement reliées à la sortie d'un générateur de fréquence 6 et à la sortie d'un générateur d'impulsions de synchronisation 13.

La sortie du générateur 6 est en outre connectée à l'entrée du générateur 13 et à l'entrée d'un diviseur de fréquence 7. La sortie de ce diviseur de fréquence 7 est reliée à une première entrée d'un dispositif de modulation 10 à travers un générateur de signaux 9, à l'entrée d'un diviseur de fréquence 8, et à une quatrième entrée du convertisseur analogique-numérique 3. Une première sortie du diviseur de fréquence 8 est couplée à une première entrée du tube analyseur 1, à une entrée de synchronisation du générateur de signaux 9 et à une entrée auxiliaire du générateur 13. Une deuxième sortie du diviseur de fréquence 8 est reliée à une deuxième entrée du dispositif de modulation 10 et à une entrée supplémentaire du générateur 13. La sortie du dispositif de modulation 10 est reliée à une deuxième entrée du tube analyseur 1. La sortie du convertisseur 3 est couplée à une borne 5 à travers un codeur 4.

Un tel dispositif de prise de vues conserve, d'une part, une fréquence ligne de 15 kHz et une fréquence image de 50 Hz, comme pour les dispositifs de prise de vues des systèmes de télévision classiques 625 lignes, et réalise, d'autre part, une analyse ondulatoire par l'adjonction d'un dispositif de modulation 10 qui permet de moduler le signal de balayage vertical classique par un signal rectangulaire. L'amplitude de ce signal rectangulaire est égale à un demi-intervalle de ligne, sa fréquence est égale à 12 MHz.

La bande passante du signal vidéofréquence délivré par la sortie du tube analyseur 1 conforme à l'invention est portée à 12 MHz, ce qui nécessite évidemment l'emploi d'optiques et d'un tube analyseur possédant un pouvoir de résolution correspondant.

Pour numériser un tel signal, une fréquence d'échantillonnage de 24 MHz est suffisante.

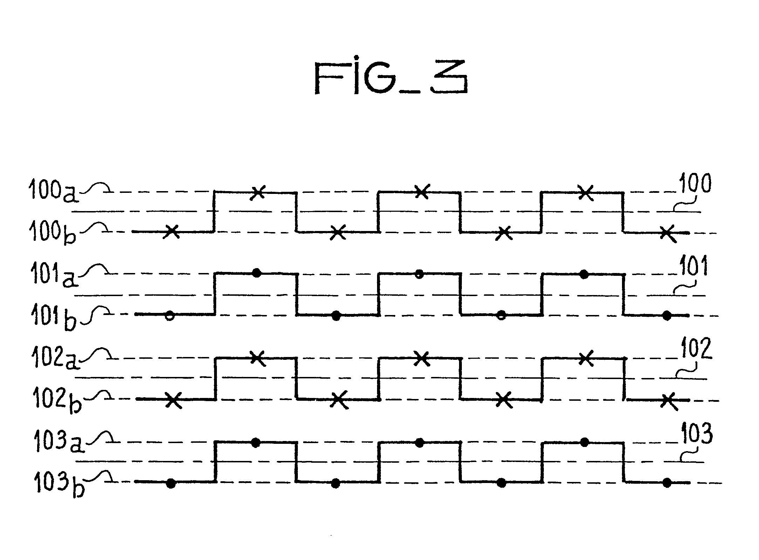

Le fonctionnement de ce dispositif de prise de vues sera mieux compris à l'aide de la fig. 3.

Sur cette figure sont représentées en traits mixtes quatre lignes d'analyse classique 100, 101, 102 et 103 d'un tube analyseur. Les lignes 100 et 102 appartiennent à une première trame, les lignes 101 et 103 appartiennent à une deuxième trame. Ces lignes correspondent à une analyse dite linéaire.

Les lignes en traits pleins représentent les lignes d'analyse propres au tube analyseur 1 utilisé dans l'invention. Ces lignes ont la forme d'un signal rectangulaire de fréquence 12 MHz et correspondent à une analyse dite ondulatoire.

Sur chaque ligne en traits pleins sont représentés soit des croix, soit des points noirs qui symbolisent les échantillons numériques fournis par le convertisseur analogique-numérique 3. La fréquence des échantillons est 24 MHz, ce qui correspond à un échantillon dans chaque intervalle formé par deux fronts consécutifs de la forme rectangulaire associé aux lignes d'analyse. Les croix symbolisent des échantillons d'une même trame, de même que les points noirs.

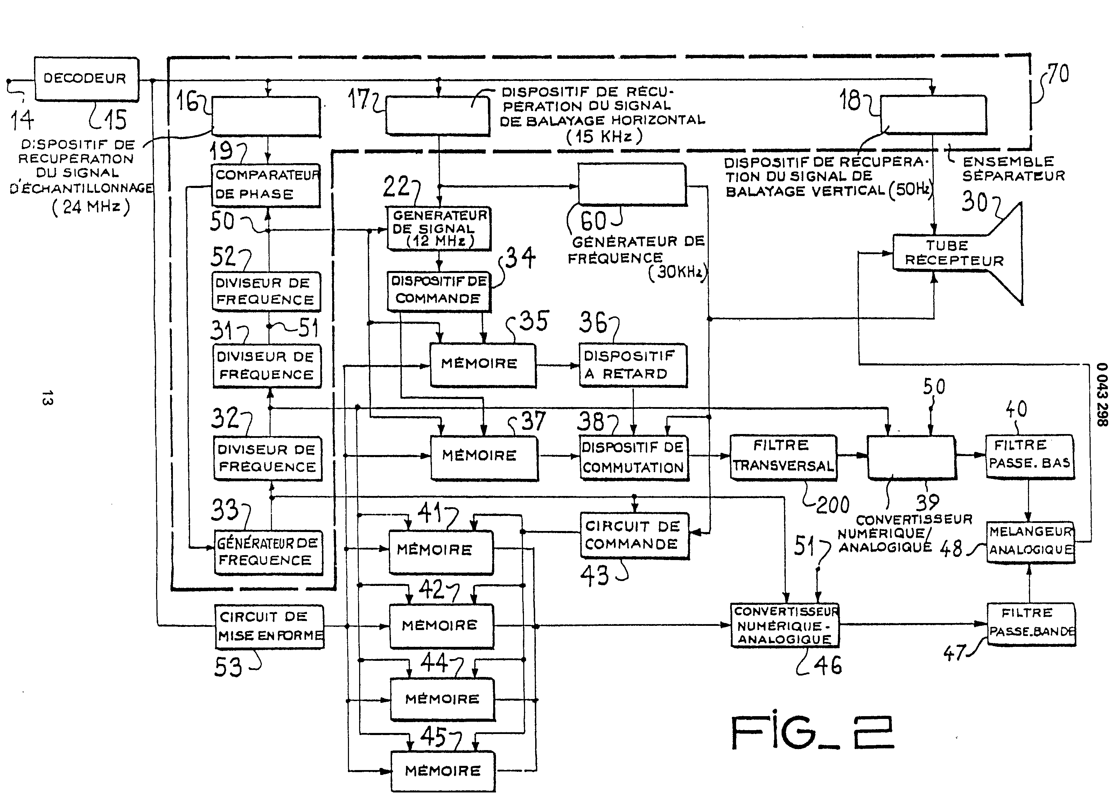

Pour chaque ligne d'analyse en traits pleins, il est repéré par l'indice à une ligne en pointillés formés par les échantillons placés entre un front montant et le front descendant suivant de la forme rectangulaire, et par l'indice b une ligne en pointillés formés par les échantillons placés entre un front descendant et le front montant suivant, ce qui sera nécessaire pour la compréhension du dispositif de restitution de vues décrit sur la fig. 2.

Le fonctionnement du dispositif de prise de vues représenté sur la fig. 1 est le suivant:

Le tube analyseur 1 est un tube à «wobbling» de spot, c'est-à-dire un tube effectuant une analyse non pas linéaire, mais ondulatoire. Dans notre mode de réalisation, il est choisi d'effectuer une analyse dont la forme est rectangulaire. Les signaux de balayage engendrant une telle analyse sont fournis par un générateur constitué par les éléments 6 à 10. Le générateur de fréquence 6 délivre un signal dont la fréquence est 192 MHz. Cette fréquence correspond à la fréquence à laquelle les éléments binaires sont délivrés par le convertisseur 3. A partir du signal de sortie du générateur de fréquence 6, les diviseurs de fréquence 7 et 8 permettent d'obtenir un signal à la fréquence 24 MHz, qui est la fréquence d'échantillonnage du convertisseur analogique-numérique 3, et les signaux classiques de balayage vertical et horizontal dont les fréquences sont respectivement 50 Hz et 15 kHz. Le signal dont la fréquence est 24 MHz est présent à la sortie du diviseur 7. Les signaux dont les fréquences sont 15 kHz et 50 Hz sont respectivement présents sur les première et deuxième sorties du diviseur 8.

Le générateur de signal 9 génère, en synchronisme avec le signal de balayage horizontal, un signal rectangulaire de fréquence 12 MHz et d'amplitude égale à un demi-intervalle de ligne. Le dispositif de modulation 10 effectue ensuite une modulation du signal classique de balayage vertical par ce signal rectangulaire.

Les signaux de balayage appliqués au tube analyseur 1 sont constitués du signal de balayage horizontal classique et du signal de balayage vertical qui résulte de la modulation effectuée par le dispositif 10. Ces signaux engendrent une analyse ondulatoire de forme rectangulaire représentée par les lignes en traits pleins sur la fig. 3.

Le signal vidéofréquence délivré par le tube analyseur 1 est amplifié par l'amplificateur 2 puis converti en échantillons numériques par le convertisseur 3. La fréquence d'échantillonnage du convertisseur 3 est 24 MHz (cette fréquence est fournie par le diviseur 7), et chaque échantillon numérique est constitué de huit éléments binaires. La fréquence des éléments binaires délivrés par le convertisseur 3 est donc 192 MHz (cette fréquence est fournie par le générateur 6).

Le générateur 13 délivre des impulsions utilisées pour synchroniser le convertisseur 3 afin qu'il soit fourni un échantillon (croix et points noirs sur la fig. 3) pour chaque intervalle formé par deux fronts successifs de la forme rectangulaire associée aux lignes d'analyse.

Les éléments binaires délivrés par le convertisseur analogique-numérique 3 sont ensuite transmis à la borne 5 après un codage par le codeur 4. Ce codage est approprié à la ligne de transmission par laquelle les données binaires sont transmises au dispositif de restitution de vues.

A la réception, après décodage et conversion numérique-analogique des données transmises, l'image produite sur l'écran d'un tube récepteur ayant des signaux de balayage classiques possède une définition deux fois plus élevée dans le sens horizontal que dans le sens vertical.

Mais il est encore possible d'améliorer les performances de la définition des images à la réception en remarquant que les fréquences élevées d'un signal vidéofréquence correspond pratiquement toujours à des transitions verticales de grande longueur et que, dans ces conditions, il existe une très grande redondance d'information d'une ligne à la suivante. D'où la possibilité de confondre des fréquences élevées, et uniquement celles-ci, sur deux lignes successives, tout en conservant une séparation complète des fréquences plus basses. La définition des lignes horizontales (dans le sens vertical) est ainsi complètement conservée et la définition des lignes verticales (dans le sens horizontal) est améliorée. C'est le but du dispositif de restitution de vues représenté sur la fig. 2.

Ce dispositif réalise un balayage du tube récepteur suivant 1250 lignes et comporte deux voies de traitement distinctes. Ces deux voies permettent de traiter simultanément un train de données émis par un dispositif de prise de vues tel que décrit sur la fig. 1, et de délivrer respectivement la partie inférieure et la partie supérieure du spectre du signal vidéofréquence.

La partie inférieure du spectre est obtenue en utilisant, pour chaque ligne d'analyse de la prise de vues, un échantillon sur deux pour une première ligne de balayage du tube récepteur et les échantillons restants pour une deuxième ligne de balayage du tube récepteur. La partie supérieure du spectre est obtenue en répétant sur deux lignes de balayage consécutives du tube récepteur les échantillons d'une même ligne d'analyse et en filtrant.

Sur la fig. 2, une borne 14 destinée à recevoir un train de données binaires caractéristique de l'information de luminance est reliée à l'entrée d'un décodeur 15. Ce train de données est supposé avoir été émis par un dispositif de prise de vues tel que celui décrit sur la fig. 1.

La sortie du décodeur 15 est couplée à l'entrée d'un dispositif 16 de récupération de la fréquence d'échantillonnage 24 MHz, à l'entrée d'un dispositif 17 de récupération du signal de balayage horizontal classique (15 kHz) et à l'entrée d'un dispositif 18 de récupération du signal de balayage vertical classique (50 Hz).

La sortie du dispositif 16 est reliée à une première entrée d'un comparateur de phase 19 dont une deuxième entrée est couplée à la sortie d'un générateur de fréquence 33 à travers des diviseurs de fréquence 52, 31 et 32 disposés en série. La sortie du comparateur de phase 19 est reliée à l'entrée d'un générateur de fréquence 33.

La sortie du dispositif 17 est reliée à l'entrée de synchronisation d'un générateur de signaux 22 dont l'entrée est connectée à la sortie du diviseur de fréquence 52.

La sortie de décodeur 15 est couplée à travers un circuit de mise en forme 53 à chacune des entrées de six mémoires 35, 37, 41, 42, 44 et 45. La sortie du générateur de signaux 22 est reliée à l'entrée d'un dispositif de commande 34 dont une première et une deuxième sortie sont respectivement reliées à une entrée de commande de prise en mémoire de la mémoire 35 et à une entrée de commande de prise en mémoire de la mémoire 37.

La sortie 50 du diviseur de fréquence 52 est reliée à l'entrée de commande de lecture des mémoires 35 et 37. La sortie du diviseur de fréquence 32 est reliée à une première entrée de commande des mémoires 41, 42, 44 et 45, dont une deuxième entrée de commande est reliée à la sortie d'un circuit de commande 43. La sortie de la mémoire 35 est reliée à une première entrée d'un dispositif de commutation 38 à travers un dispositif à retard 36. La sortie de la mémoire 37 est reliée à une deuxième entrée du dispositif de commutation 38 dont la sortie est reliée à l'entrée d'un filtre transversal 200. La sortie de ce filtre transversal 200 est couplée à l'entrée d'un filtre passe-bas 40 à travers un convertisseur numérique-analogique 39. La sortie de ce filtre passe-bas 40 est reliée à une première entrée d'un mélangeur analogique 48, dont la seconde entrée est couplée à la sortie d'un convertisseur numérique-analogique 46 à travers un filtre passe-bande 47. L'entrée du convertisseur numérique-analogique 46 est reliée à chacune des sorties des mémoires 41, 42, 44 et 45.

Le convertisseur numérique-analogique 39 comporte deux entrées de commande respectivement connectées à la sortie du diviseur de fréquence 32 et à la sortie 50 du diviseur de fréquence 52. Le convertisseur numérique-analogique 46 comporte de même deux entrées de commande respectivement reliées à la sortie du générateur de fréquence 33 et à la sortie 51 du diviseur de fréquence 31.

La sortie du mélangeur analogique 48 est reliée à une première entrée d'un tube récepteur 30 dont une deuxième entrée est couplée à la sortie du dispositif 17 à travers un générateur de fréquence 60.

Une troisième entrée du tube récepteur 30 est reliée à la sortie du dispositif 18. La sortie du générateur de fréquence 60 est couplée à chaque deuxième entrée de commande des mémoires 41, 42, 44 et 45 à travers le dispositif de commande 43 dont une entrée auxiliaire est connectée à la sortie du générateur de fréquence 33.

Enfin, une entrée de commande de commutation du dispositif de commutation 38 est reliée à la sortie du générateur de fréquence 60.

Les dispositifs 16, 17, 18, le comparateur de phase 19, les diviseurs 32, 31 et 52, et le générateur de fréquence 33 constituent un ensemble séparateur 70.

Le fonctionnement du dispositif de restitution de vues qui vient d'être décrit est le suivant:

Les dispositifs 16, 17 et 18, communs à tous les dispositifs de restitution de vues, permettent, après décodage du train de données par le décodeur 15, de récupérer respectivement un signal à la fréquence d'échantillonnage 24 MHz et les signaux classiques de balayage horizontal (de fréquence 15 kHz) et vertical (de fréquence 50 Hz).

Le générateur 33 délivre un signal à la fréquence $F'_B$ égale à 384 MHz. Les signaux délivrés par les diviseurs de fréquence 32, 31 et 52 sont respectivement à la fréquence 192 MHz, 48 MHz et 24 MHz. Le comparateur de phase 19, le générateur de fréquence 33 et les diviseurs 31, 32 et 52 constituent des moyens d'asservissement pour asservir le signal de sortie du diviseur 52 par rapport au signal à la fréquence 24 MHz fourni par le dispositif 16. A partir de ce signal, le générateur de signaux 22 délivre un signal rectangulaire, à la fréquence 12 MHz, synchronisé avec le signal de balayage horizontal délivré par le dispositif 17.

Les signaux de balayage vertical et horizontal du tube récepteur 30 sont respectivement le signal classique (de fréquence 50 Hz) délivré par le dispositif 18 et un signal auxiliaire, délivré par le générateur 60, synchrone avec le signal classique délivré par le dispositif 17. La fréquence de ce signal auxiliaire est égale à 30 kHz, ce qui est le double de la fréquence de signal classique de balayage horizontal, de sorte que le nombre de lignes balayées sur l'écran du tube récepteur est 1250 pour deux trames.

En outre, le présent dispositif de restitution de vues comporte deux voies de traitement des données délivrées par le circuit de mise en forme 53.

L'une comprend: les mémoires 35 et 37, le dispositif à retard 36, le dispositif de commutation 38, le convertisseur numérique-analogique 39 et le filtre passe-bas 40.

Les signaux de commande d'écriture en mémoire des mémoires 35 et 37 sont délivrés par le dispositif de commande 34. Ce dispositif de commande 34 est associé au générateur 22, et fournit respectivement sur ses deux sorties un signal de commande d'écriture en mémoire dans la mémoire 35 entre un front montant et le front descendant suivant du signal rectangulaire délivré par le générateur 22, et un signal d'écriture en mémoire dans la mémoire 37 entre un front descendant et le front montant suivant de ce même signal rectangulaire, ce qui, dans les deux cas, correspond au stockage d'un échantillon sur deux.

Prenons, par exemple, la ligne 100 sur la fig. 3: la mémoire 35 mémorise les échantillons numériques correspondant à la ligne 100a et la mémoire 37 les échantillons numériques correspondant à la ligne 100b. Ces échantillons numériques sont ensuite lus dans ces deux mémoires à la fréquence 24 MHz. Le temps de lecture des échantillons d'une ligne d'analyse contenus dans chaque mémoire est de 32 µs (ce qui correspond à une période d'un signal à la fréquence 30 kHz). Ceux délivrés par la mémoire 35 sont retardés, par le dispositif à retard 36, d'un retard égal à 32 µs.

Pour la ligne 100, par exemple, le dispositif de commutation 38 délivre, suivant la fréquence 24 MHz, les échantillons numériques correspondant à la ligne 100a (lus dans la mémoire 35), ce qui prend 32 µs, puis les échantillons numériques correspondant à la ligne 100b (délivrés par le dispositif à retard 36), ce qui prend de même 32 µs.

Mais le fait de prélever un échantillon sur deux afin de former deux lignes (pour un balayage à 1250 lignes) à partir d'une ligne d'un balayage à 625 lignes représente en fait un sous-échantillonnage de la bande vidéo à transmettre; or ce sous-échantillonnage est générateur de fréquences parasites («aliasing» en littérature anglo-saxonne). Ces fréquences parasites peuvent facilement être éliminées par un filtrage numérique spatial du type transversal utilisant une combinaison linéaire des échantillons voisins de l'échantillon manquant. Ce filtrage entraîne une atténuation de plusieurs dizaines de décibels sur la nouvelle fréquence d'échantillonnage $\dfrac{Fech}{2}$, sur la moitié de cette fréquence $\dfrac{Fech}{4}$, et sur toute la partie de spectre comprise entre ces deux fréquences. Un tel filtrage est effectué par le filtre 200 sur les échantillons délivrés par le dispositif de commutation 38.

Puis le convertisseur numérique-analogique 39 convertit les échantillons délivrés par le filtre 200 en un signal analogique. Ce convertisseur numérique-analogique 39 est associé au filtre passe-bas 40 dont la fréquence de coupure 12 MHz est suffisante pour restituer la totalité des informations contenues dans la partie correspondante (0 à 6 MHz) du spectre du signal de luminance du signal vidéofréquence initial.

Le signal obtenu à la sortie du filtre 40 permet au tube récepteur 30 de reproduire les transitions horizontales (dans le sens vertical) aussi parfaitement que s'il avait été effectué un balayage à 1250 lignes lors de la prise de vues. Cela est dû au décalage d'un échantillon sur deux qui a été fait à l'analyse.

L'autre voie de traitement comprend: les mémoires 41, 42, 44 et 45, le circuit de commande 43, le convertisseur numérique-analogique 46 et le filtre 47.

Cette voie imbrique les échantillons numériques des lignes repérées par les indices a et b (fig. 3) qui correspondent à une même ligne d'analyse. Etant donné que les 625 lignes d'analyse initiales (en traits pleins sur la fig. 3) de durée de 64 µs sont à la réception transformées en 1250 lignes de durée de 32 µs, la durée de chaque train de bits correspondant à chaque ligne d'analyse (en traits pleins) est comprimée dans un rapport 2 à l'aide des mémoires numériques 41, 42, 44 et 45, dont la fréquence de lecture (384 MHz) est deux fois plus élevée que celle de l'écriture. Chaque train de bits correspondant à une ligne d'analyse est lu deux fois avant d'être converti en analogique par le convertisseur 46. Le circuit de commande 43 permet de lire successivement à la fréquence 384 MHz les bits mémorisés dans les mémoires 41, 42, 44 et 45.

Prenons, par exemple, la ligne d'analyse 100 de la fig. 3. Tous les bits correspondant à cette ligne d'analyse sont mémorisés suivant la fréquence 192 MHz dans les mémoires 41 et 42, par exemple. La durée de cette opération de mise en mémoire est de 64 µs.

A la ligne suivante 101, les mémoires 41 et 42 sont lues l'une après l'autre suivant la fréquence 384 MHz. Cette opération de lecture dure 64 µs. Pendant cette lecture, les échantillons numériques correspondant à la ligne 101 sont mémorisés dans les mémoires 44 et 45. A la ligne suivante 102, le processus reprend.

Chaque ligne d'analyse initiale (en traits pleins) est donc remplacée par deux lignes comportant chacune tous les échantillons placés sur une ligne d'analyse initiale.

Le convertisseur numérique-analogique 46 convertit le débit binaire reçu sur son entrée comme s'il s'agissait d'une succession d'échantillonnages au rythme de 48 MHz, mais le filtre 47 ne prélève que la partie du spectre comprise entre 12 et 24 MHz avant de réunir ce spectre avec celui de la première voie à l'aide du mélangeur analogique 48.

Dans un tel dispositif de restitution de vues, la définition des mires horizontales (dans le sens vertical) est aussi parfaite que s'il avait été effectué un balayage à 1250 lignes (spectre 0-6 MHz), et la définition des mires verticales (dans le sens horizontal) correspond à la définition obtenue par les systèmes de télévision classiques 625 lignes utilisant une fréquence d'échantillonnage de 24 MHz.

Le traitement des échantillons numériques par la deuxième voie se justifie par le fait que les fréquences élevées d'un signal vidéo correspondent pratiquement toujours à des transitions verticales de grande longueur, et que, dans ces conditions, il existe une très grande redondance d'information d'une ligne à la suivante.

Il est à noter que le système de télévision selon l'invention, constitué d'un dispositif de prise de vues et d'un dispositif de restitution de vues tels que représentés sur les fig. 1 et 2, permet:

— de conserver une base de temps 625 lignes pour les dispositifs de prise de vues,

— de réduire le débit numérique de moitié par rapport à un véritable système de télévision 1250 lignes,

— de réaliser une reproduction sur 1250 lignes avec une résolution horizontale (dans le sens vertical) complète,

— de reproduire sur toutes les lignes les points correspondant aux fréquences élevées moyennant une confusion de positions de deux points d'image dans le sens vertical, et

— d'être totalement compatible avec le système de télévision classique 625 lignes.

L'invention n'est pas limitée aux modes de réalisation décrits et représentés. En particulier, le système selon l'invention a été décrit à partir d'un signal de luminance, mais il est également applicable à chacune des composantes de différence de couleur d'un signal couleur TV classique, avec toutefois une fréquence d'échantillonnage et des largeurs de bande de filtrage différentes.

De même, il pourrait être appliqué à un signal de luminance répondant à d'autres critères que ceux du système de télévision 625 lignes pris en référence.

**Revendications**

1. Système de télévision à haute définition comportant, à l'émission, un dispositif de prise de vues comportant: un tube analyseur (1) fournissant un signal vidéofréquence, et un premier générateur de signaux (6 à 10) générant les signaux de balayage 1H et 1V nécessaires au fonctionnement du tube analyseur (1), ces signaux 1H et 1V engendrant une analyse ondulatoire ayant pour fréquence ligne $F_L$ et pour fréquence d'ondulation F, et, à la réception, un dispositif de restitution de vues comportant: un tube récepteur (30), un deuxième générateur de signaux (17, 18 et 60) générant des signaux de balayage 2H et 2V nécessaires au fonctionnement du tube récepteur (30), ces signaux 2H et 2V engendrant une restitution linéaire ayant pour fréquence ligne $2F_L$, caractérisé en ce que le dispositif de restitution de vues comporte en outre: une première voie de traitement (35 à 40 et 200) ayant une entrée couplée à l'entrée du dispositif de restitution de vues et une sortie fournissant un premier signal correspondant à la partie basse du spectre du signal d'entrée du tube récepteur (30), une deuxième voie de traitement (41 à 47) ayant une entrée couplée à l'entrée du dispositif de restitution de vues et une sortie fournissant un deuxième signal correspondant à la partie haute du spectre du signal d'entrée du tube récepteur (30), et un mélangeur analogique (48) ayant des première et deuxième entrées respectivement couplées à la sortie de la première voie de traitement et à la sortie de la deuxième voie de traitement et une sortie fournissant le signal d'entrée du tube récepteur (30).

2. Système de télévision selon la revendication 1, caractérisé en ce que le dispositif de prise de vues comporte un convertisseur analogique-numérique (3) pour fournir des échantillons numériques du signal vidéofréquence délivré par le tube analyseur, la fréquence d'échantillonnage de ce convertisseur étant 2F, et en ce que la première voie de traitement comporte un circuit de traitement (35 à 38 et 200) ayant une entrée couplée à l'entrée du dispositif de restitution de vues, ce circuit de traitement étant destiné à traiter les échantillons numériques du signal délivré par le tube analyseur (1) de façon que la contribution de la première voie à l'élaboration du signal d'entrée du tube récepteur (30) entraîne, pour chaque ligne de balayage du tube récepteur (30), la restitution d'un point sur deux d'une ligne d'analyse et, pour deux lignes de balayage consécutives du tube récepteur (30), la restitution de la totalité des points d'une ligne d'analyse, un convertisseur numérique-analogique (39) ayant une entrée couplée à la sortie du circuit de traitement, et un filtre passe-bas (40) ayant une entrée couplée à la sortie du convertisseur numérique-analogique (39) et une sortie couplée à la première entrée du mélangeur analogique (48).

3. Système de télévision selon la revendication 1, caractérisé en ce que le dispositif de prise de vues comporte un convertisseur analogique-numérique (3) pour fournir des échantillons numériques du signal vidéofréquence délivré par le tube analyseur (1), la fréquence d'échantillonnage de ce convertisseur étant 2F, et en ce que la deuxième voie de traitement comporte un circuit de traitement (41 à 45) ayant une entrée couplée à l'entrée du dispositif de restitution de vues, ce circuit de traitement étant destiné à comprimer la durée du train d'échantillons numériques correspondant à chaque ligne d'analyse et à répéter deux fois ce train d'échantillons comprimé de façon que la contribution de la deuxième voie à l'élaboration du signal d'entrée du tube récepteur (30) entraîne, pour chaque ligne de balayage du tube récepteur (30), la restitution de la totalité des points d'une ligne d'analyse, cette restitution ayant lieu sur deux lignes de balayage consécutives du tube récepteur (30), un convertisseur numérique-analogique (46) ayant une entrée couplée à la sortie du circuit de traitement, et un filtre passe-bande (47) ayant une entrée couplée à la sortie du convertisseur numérique-analogique (46) et une sortie couplée à la deuxième entrée du mélangeur analogique (48).

4. Système de télévision selon la revendication 2, caractérisé en ce que le circuit de traitement comporte: une première (35) et une deuxième (37) mémoire numérique, de fréquence d'écriture et de lecture identique, mémorisant la totalité des échantillons correspondant à une ligne d'analyse, l'écriture en mémoire étant commandée pour que chaque mémoire mémorise tour à tour un échantillon numérique, chaque mémoire ayant une entrée couplée à l'entrée du dispositif de restitution de vues, un dispositif à retard (36), de retard égal à $\frac{1}{2F_L}$, ayant une entrée couplée à la sortie de la première mémoire (35), un dispositif de commutation (38) ayant des première et deuxième entrées respectivement couplées à la sortie du dispositif à retard et à la sortie de la deuxième mémoire (37), et un filtre transversal (200) ayant une entrée couplée à la sortie du dispositif de commutation (38) et une sortie couplée à l'entrée du convertisseur numérique-analogique (39).

5. Système de télévision selon la revendication 3, caractérisé en ce que le circuit de traitement comporte k mémoires numériques (41, 42, 44 et 45) (k entier positif) ayant chacune une entrée couplée à l'entrée du dispositif de restitution de vues, une sortie couplée à l'entrée du convertisseur numérique-analogique (46), et une entrée de commande de lecture, la fréquence de lecture de ces mémoires étant deux fois plus élevée que la fréquence d'écriture, et un dispositif de commande (43) ayant une sortie couplée à chacune des entrées de commande des k mémoires (41, 42, 44 et 45) pour commander alternativement leur lecture.

## Claims

1. High-resolution television system comprising, on the transmitter side, an image pick-up device comprising: an image tube (1) supplying a video frequency signal and a first signal generator (6 to 10) generating the scanning signals 1H and 1V required for operation of the image tube (1), these signals 1H and 1V providing an undulated scan at the line frequency $F_L$ and having an undulation frequency F, and on the receiving side, a picture restitution device comprising: a receiver tube (30) and a second signal generator (17, 18 and 60) generating scanning signals 2H and 2V required for operation of the receiver tube (30), these signals 2H and 2V providing a linear restitution at the line frequency $2F_L$, characterized in that the picture restitution device further comprises: a first processing path (35 to 40, and 200) having an input coupled to the input of the pecture restitution device and an output supplying a first signal corresponding to the low part of the spectrum of the input signal of the receiver tube (30), a second processing path (41 to 47) having an input coupled to the input of the picture restitution device and an output supplying a second signal corresponding to the high part of the spectrum of the input signal of the receiver tube (30), and an analog mixer (48) having first and second inputs coupled to the output of the first processing path and to the output of the second processing path, respectively, and an output supplying the input signal of the receiver tube (30).

2. Television system according to Claim 1, characterized in that the image pick-up device comprises an analog-digital converter (3) supplying digital samples of the video frequency signal supplied by the image tube, the sampling frequency of this converter being 2F, and in that the first processing path comprises a processing circuit (35 to 38, and 200) having an input coupled to the input of the picture restitution device, this processing circuit being adapted to process the digital samples of the signal supplied from the image tube (1) in such a manner that the contribution of the first path to the generation of the input signal of the receiver tube (30) causes, for each deflection line of the receiver tube (30), the restitution of one point out of two of a scanning line and, for two successive deflection lines of the receiver tube (30), the restitution of the totality of the points of a scanning line, a digital-analog converter (39) having an input coupled to the output of the processing circuit and a low-pass filter (40) having an input coupled to the output of the digital-analog converter (39) and an output coupled to the first input of the analog mixer (48).

3. Television system according to Claim 1, characterized in that the image pick-up device comprises an analog-digital converter (3) supplying digital samples of the video frequency signal supplied by the image tube (1), the sampling frequency of this converter being 2F, and in that the second processing path comprises a processing circuit (41 to 45) having an input coupled to the input of the picture restitution device, this processing circuit being adapted to compress the duration of the digital sample sequence corresponding to each scanning line and to repeat twice this compressed sequence of samples in such a manner that the contribution of the second path to the generation of the input signal of the receiver tube (30) causes, for each deflection line of the receiver tube (30), the restitution of the totality of the points of one scanning line, this restitution occurring across two successive deflection lines of the receiver tube (30), a digital-analog converter (46) having an input coupled to the output of the processing circuit and a band-pass filter (47) having an input coupled to the output of the digital-analog converter (46) and an output coupled to the second input of the analog mixer (48).

4. Television system according to Claim 2, characterized in that the processing circuit comprises: a first (35) and a second (37) digital memory having identical writing and reading frequencies and storing the totality of the samples corresponding to one scanning line, the writing into the memory being controlled in such a manner that each of the memories in turn stores one digital sample, each memory having an input coupled to the input of the picture restitution device, a delay device (36) of the delay $\frac{1}{2F_L}$, having an input coupled to the output of the first memory (35), a switching device (38) having first and second inputs coupled to the output of the delay device and to the output of the second memory (37), respectively, and a transverse filter (200) having an input coupled to the output of the switching device (38) and an output coupled to the input of the digital-analog converter (39).

5. Television system according to Claim 3, characterized in that the processing circuit comprises digital k memories (41, 42, 44, and 45) (k positive integer) each having an input coupled to the input of the picture restitution device, an output coupled to the input of the digital-analog converter (46) and a reading control input, the reading frequency of these memories being twice as high as the writing frequency, and a control device (43) having an output coupled to each of the control inputs of the k memories (41, 42, 44, and 45) for alternatively controlling the reading thereof.

**Patentansprüche**

1. Fernsehsystem mit hoher Auflösung, das sendeseitig eine Bildaufnahmevorrichtung enthält, die eine Aufnahmeröhre (1), welche ein Videofrequenzsignal liefert, und einen ersten Signalgenerator (6 bis 10) enthält, der die Ablenksignale 1H und 1V erzeugt, die für den Betrieb der Aufnahmeröhre (1) erforderlich sind, wobei diese Signale 1H und 1V eine wellenförmige Abtastung mit der Zeilenfrequenz $F_L$ und der Wellungsfrequenz F erzeugen, und empfangsseitig eine Bildwiedergabevorrichtung umfassen, die eine Empfängerröhre (30) und einen zweiten Signalgenerator (17, 18 und 60) enthält, welcher die Ablenksignale 2H und 2V erzeugt, die für den Betrieb der Empfängerröhre (30) erforderlich sind, wobei diese Signale 2H und 2V eine linienförmige Wiedergabe mit der Zeilenfrequenz $2F_L$ erzeugen, dadurch gekennzeichnet, dass die Bildwiedergabevorrichtung ferner umfasst: einen ersten Verarbeitungszweig (35 bis 40 sowie 200) mit einem an den Eingang der Bildwiedergabevorrichtung angekoppelten Eingang und einem Ausgang, der ein erstes Signal liefert, welches dem niedrigen Teil des Spektrums des Eingangssignals der Empfängerröhre (30) entspricht, einem zweiten Verarbeitungszweig (41 bis 47) mit einem an den Eingang der Bildwiedergabevorrichtung angekoppelten Eingang und einem Ausgang, welcher ein zweites Signal liefert, das dem hohen Teil des Spektrums des Eingangssignals der Empfängerröhre (30) entspricht, und einen Analogmischer (48), dessen erster bzw. zweiter Eingang an den Ausgang des ersten Verarbeitungszweiges bzw. an den Ausgang des zweiten Verarbeitungszweiges angekoppelt ist und dessen Ausgang das Eingangssignal der Empfängerröhre (30) liefert.

2. Fernsehsystem nach Anspruch 1, dadurch gekennzeichnet, dass die Bildaufnahmevorrichtung einen Analog/Digital-Umsetzer (3) zur Bildung von digitalen Signalproben des videofrequenten Signals umfasst, das von der Aufnahmeröhre abgegeben wird, wobei die Signalprobenfrequenz dieses Umsetzers 2F beträgt, und dass der erste Verarbeitungszweig eine Verarbeitungsschaltung (35 bis 38 sowie 200) enthält, deren Eingang an den Eingang der Bildwiedergabevorrichtung angekoppelt ist, wobei diese Verarbeitungsschaltung dazu bestimmt ist, die digitalen Signalproben des von der Aufnahmeröhre (1) abgegebenen Signals derart zu behandeln, dass der Beitrag des ersten Zweiges zur Gewinnung des Eingangssignals für die Empfängerröhre (30) für jede Ablenkzeile der Empfängerröhre (30) die Wiedergabe jeweils eines von zwei Punkten einer Abtastzeile sowie für zwei aufeinanderfolgende Ablenkzeilen der Empfängerröhre (30) die Wiedergabe der Gesamtheit von Punkten einer Abtastzeile zur Folge hat, sowie einen Digital/Analog-Umsetzer (39) mit einem an den Ausgang der Verarbeitungsschaltung angekoppelten Eingang und ein Tiefpassfilter (40) umfasst, dessen Eingang an den Ausgang des Digital/Analog-Umsetzers (39) und dessen Ausgang an den ersten Eingang des Analogmischers (48) angekoppelt ist.

3. Fernsehsystem nach Anspruch 1, dadurch gekennzeichnet, dass die Bildaufnahmevorrichtung einen Analog/Digital-Umsetzer (3) zur Abgabe von digitalen Signalproben des von der Aufnahmeröhre (1) gelieferten Videofrequenzsignals umfasst, wobei die Signalprobenfrequenz dieses Umsetzers 2F beträgt, und dass der zweite Verarbeitungszweig eine Verarbeitungsschaltung (41 bis 45) mit einem an den Eingang der Bildwiedergabevorrichtung angekoppelten Eingang umfasst, wobei diese Verarbeitungsschaltung dazu bestimmt ist, die Dauer der Folge von digitalen Signalproben zu komprimieren, die jeder Abtastzeile entspricht, und diese komprimierte Folge von Signalproben zu wiederholen, so dass der Beitrag des zweiten Zweiges zur Gewinnung des Eingangssignals der Empfängerröhre (30) für jede Ablenkzeile der Empfängerröhre (30) die Wiedergabe der Gesamtheit von Punkten einer Abtastzeile zur Folge hat, wobei diese Wiedergabe über zwei aufeinanderfolgende Ablenkzeilen der Empfängerröhre (30) stattfindet, sowie einen Digital/Analog-Umsetzer (46) mit einem an den Ausgang der Verarbeitungsschaltung angekoppelten Eingang und ein Bandpassfilter (47) umfasst, dessen Eingang mit dem Ausgang des Digital/Analog-Umsetzers (46) und dessen Ausgang mit dem zweiten Eingang des Analogmischers (48) verbunden ist.

4. Fernsehsystem nach Anspruch 2, dadurch gekennzeichnet, dass die Verarbeitungsschaltung umfasst: einen ersten (35) sowie einen zweiten (37) digitalen Speicher mit gleicher Schreib- und Lesefrequenz, welche die Gesamtheit der Signalproben speichern, die einer Abtastzeile entsprechen, wobei das Einschreiben in den Speicher so gesteuert wird, dass jeder Speicher abwechselnd eine digitale Signalprobe einspeichert, wobei jeder Speicher einen Eingang aufweist, der an den Eingang der Bildwiedergabevorrichtung angekoppelt ist, eine Verzögerungsvorrichtung (36), deren Verzögerung gleich $\frac{1}{2}F_L$ beträgt, mit einem an den Ausgang des ersten Speichers (35) angekoppelten Eingang, eine Umschaltvorrichtung (38), deren erster bzw. zweiter Eingang an den Ausgang der Verzögerungsvorrichtung bzw. an den Ausgang des zweiten Speichers (37) angekoppelt ist, und ein Transversalfilter (200), dessen Eingang an den Ausgang der Umschaltvorrichtung (38) und dessen Ausgang an den Eingang des Digital/Analog-Umsetzers (39) angekoppelt ist.

5. Fernsehsystem nach Anspruch 3, dadurch gekennzeichnet, dass die Verarbeitungsschaltung digitale k-Speicher (41, 42, 44 und 45) (k ganzzahlig positiv) mit jeweils einem an den Eingang der Bildwiedergabevorrichtung angekoppelten Eingang und einem an den Eingang des Digital/Analog-Umsetzers (46) angekoppelten Ausgang sowie einen Lesesteuereingang umfasst, wobei die Auslesefrequenz für diese Speicher zweimal so hoch wie die Einschreibfrequenz ist, sowie eine Steuervorrichtung (43) umfasst, die einen an jeden der Steuereingänge der k-Speicher (41, 42, 44 und 45) angekoppelten Ausgang zum abwechselnden Steuern des Auslesens derselben umfasst.

# FIG_1

Fig_2

# FIG_3